# EUROPEAN PATENT SPECIFICATION

(11) **EP 4 258 878 B1**
(45) Date of publication and mention of the grant of the patent: **19.02.2025**
(21) Application number: 21839639.8
(22) Date of filing: 22.12.2021
(51) Int. Cl.: A01N 43/40, A01N 43/60, A01N 43/76, A01P 13/00, A01N 25/02, A01N 25/30

(54) **HERBICIDE COMPOSITION**
HERBIZIDZUSAMMENSETZUNG
COMPOSITION HERBICIDE

(30) Priority: 06.01.2021 GB 202100123
(43) Date of publication of application: 18.10.2023
(73) Proprietor: UPL Corporation Limited, Port Louis (MU); UPL Europe Ltd, Warrington, Cheshire WA3 6YN (GB)
(72) Inventor: PIROTTE, Alan, 4102 Ougrée (BE); MERTES, Adrien, 4837 Baelen (BE)
(74) Representative: J A Kemp LLP
(86) International application number: PCT/GB2021/053408
(87) International publication number: WO 2022/148949

(56) References cited:
- EP-A2- 0 400 585
- WO-A1-2012/123408
- WO-A1-2013/054194
- WO-A1-2019/136111
- US-A1- 2010 048 401

## Description

### Field of the Invention

The present invention relates to stable herbicide compositions including an aryloxyphenoxypropionate compound and to methods of preparing such herbicide compositions.

### Background

Emulsifiable concentrates (EC) are generally water free formulations including an active ingredient, a water immiscible solvent, a surfactant, and other additives such as stabilizers, polymers, antifoams, wetting agents etc. EC's are widely used due to their simple method of manufacture. When EC formulations are diluted with water in the spray-tank, they can form a spontaneous emulsion including emulsion droplets in the size range of 0.1 to 1.0 µm. This spontaneous emulsion can be achieved by selecting one or more surfactants based upon their ability to emulsify the solvent system, including the active ingredient, into water. By balancing the water soluble and oil soluble surfactant components at the water/solvent interface, a physically stable emulsion may be formed. When sprayed, the emulsion provides a uniform and accurate application of the active ingredient on the crop, which is essential for effective weed control.

In EC's, surfactants are usually blended and not used as a single component. Such a blend can include two non-ionic surfactants. A mixture of a non-ionic and an anionic surfactant is used more frequently. Surfactants are also known to improve herbicide efficacy. The impact of surfactants on the efficacy of the active ingredient is quantified by an increase in foliar uptake and thus the type of surfactant used is particularly useful for delivery of herbicides, growth regulators, and defoliants. Therefore, the choice of the surfactants in an agrochemical formulation is crucial.

Aryloxyphenoxy propionate herbicides, such as clodinafop, cyhalofop, haloxyfop, quizalofop, and their derivatives, have been frequently formulated as ECsthat are generally composed of organic solvents and surfactants. These ECs are generally applied after diluting with water.

Clodinafop-propargyl (prop-2-ynyl (2R)-2-[4-(5-chloro-3-fluoropyridin-2-yl)oxyphenoxy]propanoate), is a member of the aryloxyphenoxy propionate class of compounds. It acts as a systemic herbicide that acts on post-emergent weeds for the selective control of wild oats, volunteer (tame) oats, green foxtail, yellow foxtail, barnyard grass, Persian darnel, and volunteer canary seed in all types of spring wheat and Durum wheat.

Cyhalofop-butyl (butyl (2R)-2-[4-(4-cyano-2-fluorophenoxy)phenoxy]propanoic acid) is a member of the aryloxyphenoxy propionic acid class of herbicides, which are known in the art as the fop herbicides and is used to control grass weeds in rice.

Quizalofop-P-tefuryl (oxolan-2-ylmethyl 2-[4-(6-chloroquinoxalin-2-yl)oxyphenoxy] propanoate), an aryloxyphenoxy propionic acid, is a selective, post-emergence herbicide used for the control of annual and perennial grasses in potato, sugar beet, sunflower, oilseed rape, peanut and vegetable crops. Its mode of action involves the inhibition of acetyl CoA carboxylase activity.

Existing commercial EC formulations containing aryloxyphenoxy propionate or aryloxyphenoxy propionic acid active ingredients, such as, for example, quizalofop and quizalofop derivatives, contain relatively large amounts of alkylphenol ethoxylate (APE) based surfactants. APEs and their anionic derivatives are surfactants that are well known in the industry and have historically been heavily relied upon by agricultural chemical producers. APE surfactants are often selected by formulators due to their performance in a vast number of areas, such as emulsion stability, acute toxicity, temporal and thermal stability, chemical and physical stability, solution, suspension or dilution dynamics, shear stress tolerance, viscosity, or greater compatibility with other formulation components. However, recent regulatory restrictions discourage the use of APEs in agrochemical formulations.

There remains a need to develop an effective EC composition having improved performance, including a fine balance of surfactants, and which is compliant with global regulatory requirements.

WO 2012/123408 A1 describes liquid herbicidal emulsifiable concentrates comprising the herbicidal active substance metribuzin and one or more herbicidal active substances selected from a group of ACCase inhibitors.

US 2010/048401 A1 describes a herbicide composition comprising a fenoxaprop ester and a weak acid buffer system.

EP 0400585 A2 describes liquid herbicidal agents in the form of emulsifiable concentrates or concentrated emulsions in which the active compound is diclofop-methyl, fenoxaprop-ethyl or the optically active isomer (D+) thereof fenoxaprop-P-ethyl.

WO 2013/054194 A1 describes a solvent composition for dissolve an active ingredient of pesticide, comprising a natural oil-based ester, and a surfactant system having a polyethylene glycol ester or a polyoxyethylene sorbitan ester, and a fatty alcohol alkoxylate, a methyl ester alkoxylate or a fatty acid alkoxylate.

### SUMMARY

According to the present invention, there is provided a stable herbicide composition comprising:
an aryloxyphenoxy propionate herbicide, an acid or ester thereof, or a combination thereof, wherein the aryloxyphenoxypropionate herbicide is quizalofop; and
a surfactant blend comprising a sulfated surfactant, a C₈₋₂₀ alkoxylated alcohol, and a sorbitan derivative, which sorbitan derivative comprises a sorbitan ester, an ethoxylated sorbitan ester, or a combination thereof;
wherein weight ratio of the aryloxyphenoxy propionate herbicide to the surfactant blend ranges from 1:0.5 to 1:10.
The present invention also provides a process for preparing an emulsifiable concentrate composition, the process comprising:
mixing an aryloxyphenoxy propionate herbicide, or an acid or ester thereof, or a combination thereof, and a solvent to prepare a first mixture, wherein the aryloxyphenoxy propionate herbicide is quizalofop;
adding a surfactant blend to the first mixture to obtain a second mixture, wherein the surfactant blend comprises a sulfated surfactant, a C₈₋₂₀ alkoxylated alcohol, and a sorbitan derivative, which sorbitan derivative comprises a sorbitan ester, an ethoxylated sorbitan ester, or a combination thereof; and
milling the second mixture to obtain the emulsifiable concentrate composition,
wherein weight ratio of the aryloxyphenoxy propionate herbicide, or acid or ester thereof, or combination thereof, to the surfactant blend in the emulsifiable concentrate composition ranges from 1:0.9 to 1:5.
The present invention also provides a method of controlling undesirable vegetation comprising contacting the vegetation or a locus thereof with a herbicidally effective amount of an emulsifiable concentrate composition,
wherein the emulsifiable concentrate composition comprises: an aryloxyphenoxy propionate herbicide, or an acid or ester thereof, or a combination thereof, wherein the aryloxyphenoxy propionate herbicide is quizalofop, and a surfactant blend comprising a sulfated surfactant, a C₈₋₂₀ alkoxylated alcohol, and a sorbitan derivative, which sorbitan derivative comprises a sorbitan ester, an ethoxylated sorbitan ester, or a combination thereof, wherein weight ratio of the aryloxyphenoxy propionate herbicide, or the acid or ester thereof, or combination thereof, to the surfactant blend ranges from 1:0.5 to 1:10.

### General disclosure

Disclosed herein is a stable herbicide composition comprising:
an aryloxyphenoxy propionate herbicide, an acid, ester or derivative thereof, or a combination thereof; and
a surfactant blend comprising a sulfated surfactant, a C₈₋₂₀ alkoxylated alcohol, and a sorbitan derivative,
wherein a weight ratio of the aryloxyphenoxy propionate herbicide to the surfactant blend ranges from 1:0.5 to 1:10.

Also disclosed herein is a stable herbicide composition comprising:
an aryloxyphenoxy propionate herbicide, an acid, ester or derivative thereof, or a combination thereof; and
a surfactant blend comprising a sulfated surfactant, a C₈₋₂₀ alkoxylated alcohol, and a sorbitan ester or an ethoxylated sorbitan ester,
wherein the weight ratio of the aryloxyphenoxy propionate herbicide to the surfactant blend ranges from 1:0.5 to 1:10.

In an aspect, the weight ratio of the aryloxyphenoxy propionate herbicide to the surfactant blend ranges from 1:0.9 to 1:5.

Also disclosed herein is an emulsifiable concentrate composition comprising:
an aryloxyphenoxy propionate herbicide, comprising clodinafop, cyhalofop, haloxyfop, quizalofop, an acid, ester or derivative thereof, or a combination thereof; and
a surfactant blend comprising a sulfated surfactant, a C₈₋₂₀ alkoxylated alcohol, and a sorbitan derivative;
wherein the weight ratio of the aryloxyphenoxy propionate herbicide to the surfactant blend ranges from 1:0.9 to 1:5.

Also disclosed herein is a process for preparing an emulsifiable concentrate composition comprising:
mixing an aryloxyphenoxy propionate herbicide, an acid, ester or derivative thereof, or a combination thereof and a solvent to prepare a first mixture;
adding a surfactant blend to the first mixture to obtain a second mixture, wherein the surfactant blend comprises a sulfated surfactant, a C₈₋₂₀ alkoxylated alcohol, and a sorbitan derivative; and
milling the second mixture to obtain the emulsifiable concentrate composition,
wherein the ratio of the aryloxyphenoxy propionate herbicide to the surfactant blend ranges from 1:0.9 to 1:5.

Also disclosed herein is a method of controlling undesirable vegetation comprising contacting the vegetation or a locus thereof with a herbicidally effective amount of an emulsifiable concentrate composition, wherein the emulsifiable concentrate composition comprises:
an aryloxyphenoxy propionate herbicide, an acid, ester or derivative thereof, or a combination thereof; and
a surfactant blend comprising a sulfated surfactant, a C₈₋₂₀ alkoxylated alcohol, and a sorbitan derivative;
wherein the weight ratio of the aryloxyphenoxy propionate herbicide to the surfactant ranges from 1: 0.9 to 1:5.

Also disclosed herein is the use of the stable herbicidal composition according to the present invention as an herbicide.

Also disclosed herein is a kit. The kit comprises a plurality of components comprising at least one of the ingredients of the stable herbicidal composition of the present disclosure.

### DETAILED DESCRIPTION

The present disclosure provides stable herbicide compositions including aryloxyphenoxy propionate herbicides.

The present disclosure provides a stable EC composition comprising an aryloxyphenoxy propionate herbicide, an acid, ester or derivative thereof, or a combination thereof; and a surfactant blend including a sulfated surfactant, a C₈₋₂₀ alkoxylated alcohol, and a sorbitan derivative.

In an aspect, the present disclosure provides a stable EC composition including an aryloxyphenoxy propionate and/or an aryloxyphenoxy propionic acid herbicide.

In an aspect, the present disclosure provides a process of preparing a stable EC composition including an aryloxyphenoxy propionate and/or aryloxyphenoxy propionic acid herbicide.

In an aspect, the present disclosure provides a method of using stable EC compositions including aryloxyphenoxy propionic acid herbicides.

Prior to setting forth the present subject matter in detail, it may be helpful to provide definitions of certain terms used herein. Unless defined otherwise, all technical and scientific terms used herein have the same meaning as is commonly understood by one of skill in the art to which this subject matter pertains. The following definitions are provided for clarity.

The use of the terms "a" "an" and "the" and similar referents (especially in the context of the claims) are to be construed to cover both the singular and the plural, unless otherwise indicated herein or clearly contradicted by context. The terms first, second etc. as used herein are not meant to denote any particular ordering, but simply for convenience to denote a plurality of, for example, layers.

The terms "comprising", "having", "including", and "containing" are to be construed as open-ended terms (i.e., meaning "including, but not limited to") unless otherwise noted.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 10% or ± 5% of the stated value. Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and independently combinable. It is understood that where a parameter range is provided, all integers within that range, and tenths thereof, are also provided. For example, "0.1-80%" includes 0.1%, 0.2%, 0.3%, etc. up to 80%.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

As used herein the term "plant" or "crop" refers to whole plants, plant organs (e.g., leaves, stems, twigs, roots, trunks, limbs, shoots, fruits etc.), plant cells, or plant seeds. This term also encompasses plant crops such as fruits. The term "plant" may further include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

The term "locus" as used herein denotes the vicinity or area designated for growth of a desired crop, and in which control of the growth and/or spread of undesirable vegetation is desired. The locus includes the vicinity of desired crop plants wherein undesirable vegetation growth has either occurred, is most likely to occur, or is yet to occur.

As used herein, an "effective amount" or a "herbicidally effective amount" is an amount of active ingredient such as an herbicide which has an adverse effect on undesirable vegetation (e.g., a weed). The adverse effect includes one or more of a deviation from natural development, killing of the undesirable vegetation, structural damage to the undesirable vegetation, desiccation, and/or growth retardation.

The salts referred to herein are agriculturally acceptable salts. As used herein, an "agriculturally acceptable salt" means a salt which is known and accepted for use in agricultural or horticultural use.

As used herein, the term "stable" refers to chemical and/or physical stabilization of an active compound (e.g., herbicide). The term 'stable' with reference to the herbicide composition, i.e. the emulsifiable concentrate composition of the present disclosure refers to the formulation being a homogeneous clear/limpid liquid and when stored for 7 days at -10°C, with ≤0.05% deposit in the composition.

The term "emulsion stability" refers to the system's ability to resist changes in its physicochemical properties over a time interval.

The stability tests described herein are conducted according to established Collaborative international Pesticides Analytical Council (CIPAC) methodologies.

The terms "percent recovery" or "% recovery" refer to the amount of active ingredient remaining in the stable herbicidal composition of the present disclosure after storing the composition for a defined period of time under defined conditions, for example, under ambient conditions, accelerated heat stability (AHS) conditions (about 54°C), or low temperature conditions (e.g., about -10°C).

"Alkyl" as used herein means a straight or branched chain saturated aliphatic hydrocarbon having the specified number of carbon atoms. Alkyl groups include, for example, groups having from 1 to 50 carbon atoms (C₁ to C₅₀ alkyl).

"Alkylene" means a straight, branched or cyclic divalent aliphatic hydrocarbon group, and may have from 1 to about 18 carbon atoms, more specifically 2 to about 12 carbons. Exemplary alkylene groups include methylene (-CH₂-), ethylene (-CH₂CH₂-), propylene (-(CH₂)₃-), cyclohexylene (-C₆H₁₀-), methylenedioxy (-O-CH₂-O-), or ethylenedioxy (-O-(CH₂)₂-O-).

"Aryloxy" means an aryl moiety that is linked via an oxygen (i.e., -O-aryl). An aryloxy group includes a C₆ to C₃₀ aryloxy group, and specifically a C₆ to C₁₈ aryloxy group. Nonlimiting examples include phenoxy, naphthyloxy, and tetrahydronaphthyloxy.

Various solutions have been proposed to stabilize formulations including an aryloxyphenoxy propionate herbicide such as quizalofop, clodinafop, cyhalofop and haloxyfop, and in particular formulations including quizalofop. The presence of adjuvant materials, surfactants, and even water, for example, can lead to significant chemical degradation of an aryloxyphenoxy propionate herbicide in an herbicidal composition. Since chemical stability is a commercially desirable factor, various solutions have been proposed to stabilize an aryloxyphenoxy propionate herbicide such as quizalofop in the formulation. However, there remains a need to develop a stable herbicidal composition comprising quizalofop, in which the rate of degradation of quizalofop is controlled and an effective concentration of quizalofop can be maintained in the formulation over an extended period of time.

It has been surprisingly and unexpectedly discovered that a stable EC composition including an aryloxyphenoxy propionate herbicide or an acid thereof, can be obtained by using a surfactant blend comprising a sulfated surfactant, a C₈₋₂₀ alkoxylated alcohol, and a sorbitan derivative. In an aspect, the weight ratio of the aryloxyphenoxy propionate herbicide to the surfactant blend ranges from 1:0.5 to 1:10, or from 1:0.9 to 1:5. The surfactant blend obtained by combining the sulfated surfactant, the C₈₋₂₀ alkoxylated alcohol, and the sorbitan derivative confers better emulsification and stabilization to the emulsifiable concentrate composition. Additionally, when the ratio of the aryloxyphenoxy propionate herbicide to surfactant blend ranges from 1: 0.9 to 1:5, the herbicide composition is efficient in controlling weeds.

Aryloxyphenoxy propionate herbicides disclosed herein include, but are not necessarily limited to, cyhalofop, fenoxaprop, fluazifop, haloxyfop, metamifop, propaquizafop, quizalofop, an acid, ester, derivative thereof, or a combination thereof.

Clodinafop has the chemical name (prop-2-ynyl (2R)-2-[4-(5-chloro-3-fluoropyridin-2-yl)oxyphenoxy]propanoate).

Fenoxaprop has the chemical name 2-[4-[(6-chloro-1,3-benzoxazol-2-yl)oxy]phenoxy]propanoic acid.

Fluazifop has the chemical name 2-[4-[5-(trifluoromethyl)pyridin-2-yl]oxyphenoxy]propanoic acid.

Haloxyfop has the chemical name 2-(4-((3-chloro-5-(trifluoromethyl)pyridin-2-yl)oxy)phenoxy)propanoic acid.

Metamifop has the chemical name ^{®}-2-(4-((6-chlorobenzo[d]oxazol-2-yl)oxy)phenoxy)-N-(2-fluorophenyl)-N-methylpropanamide.

Propaquizafop has the chemical name 2-(propan-2-ylideneamino)oxyethyl (2R)-2-[4-(6-chloroquinoxalin-2-yl)oxyphenoxy]propanoate.

Quizalofop has the chemical name 2-{4-[(6-chloroquinoxalin-2-yl)oxy]phenoxy}propanoic acid.

A stable herbicide composition as disclosed herein may comprise an aryloxyphenoxy propionate herbicide, an acid, ester or derivative thereof, or a combination thereof, and a surfactant blend comprising a sulfated surfactant, a C₈₋₂₀ alkoxylated alcohol, and a sorbitan derivative.

In the present invention, the stable herbicide composition comprises
a ratio of the aryloxyphenoxy propionate herbicide, acid, ester, or derivative thereof, or combination thereof to the surfactant blend is from 1:0.5 to 1:10.

According to an embodiment of the present invention, the ratio of the aryloxyphenoxy propionate herbicide, acid, ester, or derivative thereof, or combination thereof to the surfactant blend is from 1:0.9 to 1:5.

In an embodiment of the present invention, the stable herbicide composition is formulated as an emulsifiable concentrate composition.

An emulsifiable concentrate composition as disclosed herein may comprises an aryloxyphenoxy propionate herbicide, an acid, ester or derivative thereof, or a combination thereof; and a surfactant blend comprising a sulfated surfactant, a C₈₋₂₀ alkoxylated alcohol, and a sorbitan derivative.

An aryloxyphenoxy propionate herbicide, acid, ester or derivative thereof, as disclosed herein may comprise cyhalofop, fenoxaprop, fluazifop, haloxyfop, metamifop, propaquizafop, quizalofop, an acid, ester, derivative thereof, or a combination thereof.

An aryloxyphenoxy propionate herbicide, acid, ester or derivative thereof, as disclosed herein may comprise cyhalofop-butyl, fenoxaprop-ethyl, fluazifop-P-butyl, haloxyfop-methyl, haloxyfop-P-methyl, metamifop, propaquizafop, quizalofop-P-ethyl, quizalofop-P-tefuryl, or a combination thereof.

According to an embodiment of the present invention, the emulsifiable concentrate composition comprises quizalofop-P-ethyl, quizalofop-P-tefuryl, or a combination thereof.

According to an embodiment of the present invention, the emulsifiable concentrate composition comprises about 0.1% w/w to about 70% w/w, or about 0.5% w/w to about 60% w/w, or about 1% w/w to about 50% w/w, or about 2 % w/w to about 40%, of the aryloxyphenoxy propionate herbicide, an acid, ester, derivative thereof, or a combination thereof, based on the total weight of the emulsifiable concentrate composition.

According to an embodiment of the present invention, the emulsifiable concentrate composition comprises from about 0.1% w/w to about 70% w/w, or from about 0.5% w/w to about 60% w/w, or from about 1% w/w to about 40% w/w, or from about 2% w/w to about 30% w/w, or from about 4% w/w to about 10% w/w of Quizalofop, based on the total weight of the emulsifiable concentrate composition.

The emulsifiable concentrate composition of the present invention comprises a surfactant blend.

The surfactant blend of the present invention comprises a sulfated surfactant, a C₈₋₂₀ alkoxylated alcohol, and a sorbitan derivative, which sorbitan derivative comprises a sorbitan ester, ethoxylated sorbitan ester or a combination thereof.

According to an embodiment of the present invention, the sulfated surfactant comprises benzene sulfonic acid, dodecyl sulfonate, dodecyl benzene sulfonic acid, dodecyl sulfate, C₁₃/C₁₅ alcohol ether sulfonate, dioctylsulfosuccinate, isopropyl naphthalene sulfonate, methylene-bis-naphthalene sulfonate a salt thereof, or a combination thereof.

According to an embodiment of the present invention, salts of the sulfated surfactants comprise, for example, sodium dodecyl sulfonate, sodium dodecyl sulfate, sodium C₁₃/C₁₅ alcohol ether sulfonate, sodium dioctylsulfosuccinate, sodium isopropyl naphthalene sulfonate, sodium methylene-bis-naphthalene sulfonate, or a combination thereof.

In an embodiment, the sulphated surfactant is an anionic surfactant, and is a salt of dodecyl benzene sulfonic (DDBS) acid, for example, a calcium, sodium, potassium, or amine salt.

In an embodiment, the sulphated surfactant is dodecyl benzene sulfonic acid.

In another embodiment, the sulphated surfactant is the calcium salt of dodecyl benzene sulfonic acid.

According to an embodiment, the surfactant blend comprises from about 0.01% w/w to about 80% w/w, or from about 0.1% w/w to about 70% w/w sulfated surfactant based on the total weight of the surfactant blend.

According to an embodiment, the surfactant blend comprises from about 0.05% w/w to about 50% w/w sulfated surfactant based on the total weight of the surfactant blend.

According to an embodiment, the surfactant blend comprises from about 0.01% w/w to about 40% w/w, or from about 0.1% w/w to about 30% w/w sulfated surfactant based on the total weight of the surfactant blend.

According to an embodiment, the surfactant blend comprises from about 0.1% w/w to about 30% w/w, or from about 1% w/w to about 20% w/w dodecyl benzene sulfonic or its salt based on the total weight of the surfactant blend.

According to an embodiment, the surfactant blend comprises from about 1% w/w to about 20% w/w sulfated surfactant comprising dodecyl benzene sulfonic or its salt of the total weight of the surfactant blend.

The surfactant blend of the present invention comprises a C₈₋₂₀ alkoxylated alcohol.

According to an embodiment of the present invention, the C₈₋₂₀ alkoxylated alcohol comprises a non-ionic linear or branched alcohol ethoxylate surfactant.

According to an embodiment of the present invention, the C₈₋₂₀ alkoxylated alcohol comprises C₁₂₋₁₃, ethoxylated alcohols; C₁₆₋₁₈, ethoxylated propoxylated alcohols; C₁₀₋₁₄, ethoxylated alcohols; C₁₀₋₁₆, ethoxylated alcohols; C₁₂₋₁₅, ethoxylated alcohols; C₁₄₋₁₈, ethoxylated alcohols; C₁₂₋₁₄, ethoxylated propoxylated alcohols; C₁₂₋₁₅, ethoxylated propoxylated alcohols; lauryl alcohol ethoxylate (C₁₂-C₁₄) ethoxylated alcohol; C₁₁₋₁₅-secondary, ethoxylated propoxylated alcohols; C₁₆₋₁₈ saturated and C₁₈-unsatd., alkoxylated linear alcohol alkoxylates (e.g, Tomadol^{®} 1-5, 11 carbon 5 mole linear alcohol ethoxylate); Tomadol^{®} 1-7, 11 carbon 7 mole), linear alcohol ethoxylate), Surfonic^{®} L12-6 (12 carbon 6 mole, linear alcohol ethoxylate), Surfonic^{®} DDA6 (6 mole branched alcohol ethoxylate), Surfonic^{®} TDA6 (6 mole tridecyl alcohol branched alcohol ethoxylate), Surfonic^{®} OP-70 (7 mole octylphenol ethoxylate), Tergitol^{®} NP-6 (6 mole nonylphenol alkoxylate), Trylox^{®} 5902 (16 mole castor oil alkoxylated fatty acid), Surfonic^{®} L24-5 (24 carbon 5 mole linear alcohol ethoxylated linear alcohol). A combination comprising at least one of the foregoing C₈₋₂₀ alkoxylated alcohol may also be used.

In an embodiment, lauryl alcohol (C₁₂-C₁₄) ethoxylated alcohol is used as the alkoxylated alcohol.

According to an embodiment, the surfactant blend comprises from about 0.01% w/w to about 50% w/w, or from about 0.1% w/w to about 40% w/w, or from about 0.5% w/w to about 30% w/w, or from about 1% w/w to about 20% w/w, or from about 5% w/w to about 20% w/w of the C₈₋₂₀ alkoxylated alcohol based on the total weight of the surfactant blend.

The surfactant blend of the present invention comprises a sorbitan derivative.

The sorbitan derivative of the present invention comprises a sorbitan ester, an ethoxylated sorbitan ester, or a combination thereof.

According to an embodiment of the present invention, the sorbitan ester comprises sorbitan monostearate (Span 60), sorbitan tristearate (Span 80), sorbitan monolaurate (Span 20), or a combination thereof, but is not limited thereto.

According to an embodiment of the present invention, the sorbitan derivative comprises an ethoxylated sorbitan ester synthesized by the addition, via polymerization, of ethylene oxide to a sorbitan ester, and which are known as polysorbates and/or as Tween^{®}.

According to an embodiment of the present invention, the ethoxylated sorbitan ester comprises polysorbate 20 (Tween^{®} 20), polysorbate 60 (Tween^{®} 60), polysorbate 65 (Tween^{®} 65), polysorbate 80 (Tween^{®} 80), or a combination thereof.

According to an embodiment of the present invention, the ethoxylated sorbitan ester is polysorbate 80 (Tween^{®} 80).

According to an embodiment of the present invention, the surfactant blend comprises from about 0.01% w/w to about 50% w/w, or from about 0.1% w/w to about 40% w/w, or from about 0.5% w/w to about 30% w/w, or from about 1% w/w to about 20% w/w, or from about 1% w/w to about 10% w/w of a sorbitan derivative based on the total weight of the surfactant blend.

According to an embodiment, the aryloxyphenoxy propionate herbicide and the surfactant blend are in a weight ratio ranging from 1:0.5 to 1:10.

According to an embodiment, the aryloxyphenoxy propionate herbicide and the surfactant blend are in a weight ratio ranging from 1:0.9 to 1:5.

According to an embodiment, the aryloxyphenoxy propionate herbicide and the surfactant are blended in a 1:1 ratio, a 1:3 ratio, or a 1:4 ratio.

According to an embodiment, the EC composition may further comprise a solvent.

According to an embodiment, the solvent comprises a non-polar water-immiscible solvent, a polar aprotic water miscible organic solvent, or a combination thereof.

According to an embodiment, the solvent comprises a substituted or unsubstituted aromatic or aliphatic hydrocarbon, an alkyl ester of a plant oil, or a combination thereof.

According to an embodiment, the EC composition comprises a polar solvent. The polar solvent comprises, for example, a N,N-dialkyl fatty acid amide such as those found in products such as, but not limited to, di-substituted amide (for example N,N-di-methyloctanamide, N,N-dimethylcarprylamide, N,N-dimethyldecanamide, and N,N-dimethylcapramide); compounds sold under the trade names, Hallcomid^{®} M810, Hallcomid^{®} M10, Rhodiasolv^{®} ADMA 810, Rhodiasolv^{®} ADMA 10, Genagen^{®} 4166, and Genagen^{®} 4296; cyclohexanone; dibasic esters such as, but not limited to, dimethyl 2-methylglutarate (available as Rhodiasolv^{®} IRIS), and a dibasic ester mixture composed of dimethyl glutarate, dimethyl succinate, and dimethyl adipate (available as Rhodiasolv^{®} RPDE); glycol ethers and polyalkylene diglycol ethers such as, but not limited to, dipropylene glycol methyl ether (available as Dowanol^{™} DPM); alkylene carbonates such as, but not limited to, propylene carbonate (available as Jeffsol^{®} AG 1555; methyl-5-(dimethylamino)-2-methyl-5-oxopentanoate (available as Rhodiasolv^{®} Polarclean); ketones such as, but not limited to, cyclopentanone and cyclohexanone. A combination comprising at least one of the foregoing may also be used.

Water-miscible polar aprotic solvents include, for example, alkyl lactates, isopropyl lactate, alkyl carbonates, polyethylene glycols, polyethylene glycol alkyl ethers, monopropylene glycol, polypropylene glycols, polypropylene glycol alkyl ethers, or a combination thereof.

According to an embodiment, the solvent in the EC composition is a fatty acid ester solvent such as a C_{6-C14} fatty acid ester prepared from a plant oil. Examples of fatty acid esters includ Stepan^{®} C-25 methyl ester, Stepan^{®} C-40 methyl ester, Stepan^{®} 653 or Stepan^{®} IPM (all available from Stepan), or Witconol^{®} 2301, Witconol^{®} 2307, Witconol^{®} 2308, Witconol^{®} 2309 (all available from Witco Corporation), ethyl caproate available from SigmaAldrich, or Edenor^{®} ME C6-C10, Edenor^{®} ME C12 98/100, Tegosoft^{®} SH (available from Cognis or Tegosoft MM) and Tegosoft^{®} SH (available from Goldschmidt), or CE-1095 (methyl decanoate) available from P&G, as well as those of the Agnique^{®} and Agnique^{®} ME series of products available from Cognis such as Agnique^{®} ME 610G (C₈₋₁₀ methyl caprylate-caprate), Agnique^{®} ME 890, Agniqu^{®}e ME 1298 and Agnique^{®} ME 12C-F. A combination comprising at least one of the foregoing may also be used.

According to an embodiment, the solvent in the EC composition comprises an aromatic hydrocarbon derived from benzene, such as, for example, toluene, xylenes, mesitylene, diisopropylbenzene and its higher homologs, indane and naphthalene derivatives, such as 1-methylnaphthalene, 2-methylnaphthalene; C₅-C₁₂ aliphatic hydrocarbons (straight, branched or cyclic), such as, for example, pentane, hexane, cyclohexane, octane, 2-ethylhexane, decane; C₅-C₁₀ aliphatic alcohols (straight or branched), in particular C₆-C₉, such as hexanol, 2-ethyl butanol, heptanol, octanol, 2-octanol, and 2-ethylhexanol; or aromatic alcohols such as benzyl alcohol. A combination comprising at least one of the foregoing may also be used.

According to an embodiment, the solvent in the EC composition comprises a mineral oil such as Bayol, Bemol, American, Blandol (white mineral oil), Drakeol, Ervol, Gloria, Kaydol, Litetek, Marcol, Parol, Peneteck, Primol, Protol, Sontex, or a combination thereof.

According to an embodiment, the solvent comprises a C₁-C₄ alkyl ester (preferably methyl ester) of a C₅-C₂₀ saturated or unsaturated fatty acid or a mixture of such esters from plant oils including, without limitation, methyl, ethyl and butyl esters of canola *(B. napus),* linseed, safflower (*Carthamus tinctorius* L), soybean and sunflower oils. A combination comprising at least one of the foregoing may also be used.

According to an embodiment, the solvent in the EC composition comprises a methyl ester of a C₅-C₂₀ fatty acid or combination of methyl esters of a C₅-C₂₀ fatty acid.

According to an embodiment, the solvent comprises a mixture of a C₁₆₋₁₈ -unsaturated fatty acid methyl ester and a C₁₈-unsaturated fatty acid methyl ester.

According to an embodiment, the solvent comprises a water-miscible polar aprotic solvent comprising a C₁-C₁₀ alkyl lactate, an isopropyl lactate, a C₁-C₁₀ alkyl carbonate, a polyethylene glycol, a polyethylene glycol C₁-C₁₀₋alkyl ether, monopropylene glycol, a polypropylene glycol, a polypropylene glycol alkyl ether, or a combination thereof.

According to an embodiment of the present disclosure, the EC composition comprises from about 1% w/w to about 99% w/w, or from about 10% w/w to about 90% w/w, or from about 30% w/w to about 80% w/w solvent based on the total weight of the emulsifiable concentrate composition.

According to an embodiment, the EC composition further includes an herbicide.

According to an embodiment, the herbicide comprises: 4-CPA; 4-CPB; 4-CPP; 2,4-D; 2,4-D choline salt, 2,4-D esters and amines, 2,4-DB; 3,4-DA; 3,4-DB; 2,4-DEB; 2,4-DEP; 3,4-DP; 2,3,6-TBA; 2,4,5-T; 2,4,5-TB; acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, benthiocarb, bentazon-sodium, benzadox, benzfendizone, benzipram, benzobicyclon, benzofenap, benzofluor, benzoylprop, benzthiazuron, bialaphos, bicyclopyrone, bifenox, bilanafos, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole chlorprocarb, carfentrazone-ethyl, CDEA, CEPC, chlomethoxyfen, chloramben, chloranocryl, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clomazone, clomeprop, cloprop, cloproxydim, clopyralid, CMA, copper sulfate, CPMF, CPPC, credazine, cresol, cumyluron, cyanatryn, cyanazine, cycloate, cyclopyrimorate, cyclosulfamuron, cycloxydim, cycluron, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethbenzamide, ethametsulfuron, ethidimuron, ethiolate, ethobenzamid, etobenzamid, ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl+isoxadifen-ethyl, fenoxasulfone, fenteracol, fenthiaprop, fentrazamide, fenuron, ferrous sulfate, flamprop, flamprop-M, flazasulfuron, fluazolate, flucarbazone, flucetosulfuron, fluchloralin, flufenacet, flufenican, flufenpyr-ethyl, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, fluorochloridone, fluoroxypyr, fluoroxypyr-meptyl, flurtamone, fluthiacet, fomesafen, foramsulfuron, fosamine, fumiclorac, furyloxyfen, glufosinate, glufosinate-ammonium, glufosinate-P-ammonium, glyphosate salts and esters, halauxifen, halauxifen-methyl, halosafen, halosulfuron-methyl, haloxydine, hexachloroacetone, hexaflurate, hexazinone, imazamethabenz, imazamox, imazapic, imazapyr, imazaquin, imazosulfuron, cloransulam-methyl, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metoxuron, metribuzin, metsulfuron, metsulfuron-methyl, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, ortho-dichlorobenzene, orthosulfamuron, oryzalin, oxadiargyl, oxadiazon, oxapyrazon, oxasulfuron, oxaziclomefone, oxyfluorfen, paraflufen-ethyl, parafluoron, paraquat, pebulate, pelargonic acid, pendimethalin, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron-methyl, procyazine, prodiamine, profluazol, profluralin, profoxydim, proglinazine, prohexadione-calcium, prometon, prometryn, pronamide, propachlor, propanil, propazine, propham, propisochlor, propoxycarbazone, propyrisulfuron, propyzamide, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, quinclorac, quinmerac, quinoclamine, quinonamid, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfometuron, sulfosate, sulfosulfuron, sulfuric acid, sulglycapin, swep, SYN-523, TCA, tebutam, tebuthiuron, tefuryltrione, tembotrione, tepraloxydim, terbacil, terbucarb, terbuchlor, terbumeton, terbuthylazine, terbutryn, tetrafluoron, thenylchlor, thiazafluoron, thiazopyr, thidiazimin, thidiazuron, thiencarbazone-methyl, thifensulfuron, thifensulfurn-methyl, thiobencarb, tiocarbazil, tioclorim, topramezone, tralkoxydim, triafamone, tri-allate, triasulfuron, triaziflam, tribenuron, tribenuron-methyl, tricamba, triclopyr choline salt, triclopyr esters and salts, tridiphane, trietazine, trifloxysulfuron, trifluralin, triflusulfuron, trifopsime, trihydroxytriazine, trimeturon, tripropindan, tritac tritosulfuron, vernolate, xylachlor and salts, esters, optically active isomers or a combination thereof.

According to an embodiment, the EC composition further includes an herbicide comprising an amide herbicides such as amicarbazone, flucarbazone, fomesafen, napropamide, napropamide-M, diflufenican, flufenacet, propanil, sulfentrazone; a chloroacetanilide herbicide such as acetochlor, alachlor, butachlor, metazachlor, metolachlor, S-metolachlor, pretilachlor, propachlor; a sulfonanilide herbicide such cloransulam, diclosulam, florasulam, flumetsulam; sulfonamide herbicides such as asulam, carbasulam, penoxsulam, pyroxsulam; a benzoic acid herbicide such as dicamba; pyrimidinyloxybenzoic acid herbicides such as bispyribac, pyriminobac; a picolinic acid herbicide such as aminopyralid, clopyralid, florpyrauxifen, halauxifen, picloram; a quinolinecarboxylic acid herbicide such as quinclorac, quinmerac; a aroylcyclohexanedione herbicide such as mesotrione, sulcotrione, tembotrione; a cyclohexene oxime herbicide such as clethodim, cycloxydim; a dinitroaniline herbicide such as pendimethalin; nitrophenyl ether herbicides such as acifluorfen, fomesafen, halosafen, oxyfluorfen; an organophosphorus herbicide such as anilofos, glufosinate, glufosinate-P, glyphosate; an oxazole herbicide such as clomazone, topramezone; a pyrazole herbicide such as halosulfuron, pyrazosulfuron, pyroxasulfone; a pyridine herbicide such as diflufenican, halauxifen, picloram, triclopyr; a chlorotriazine herbicide such as atrazine; a triazinone herbicide such as metamitron, metribuzin; a triazolone herbicide such as amicarbazone, bencarbazone, carfentrazone, flucarbazone, sulfentrazone; a triazolopyrimidine herbicide such as cloransulam, penoxsulam; a phenyluracil herbicide such as saflufenacil; a pyrimidinyl sulfonylurea herbicide such as bensulfuron, nicosulfuron, or a combination thereof.

According to an embodiment, the EC composition includes one or more adjuvants selected from surfactants (emulsifier), crop oil, fertilizers, dispersing agents, compatibility agents, foaming activators, foam suppressants, correctives, and spray colorants (dyes).

According to an embodiment, the EC composition comprises from about 0.1% to about 40%, or from about 0.5% to about 30% by weight of adjuvant based on the total weight of the EC composition.

An EC composition as disclosed herein may comprise from about 0.1% w/w to about 70% w/w of an aryloxyphenoxy propionate herbicide and about 0.01% w/w to about 60% w/w of a surfactant blend, wherein the surfactant blend comprises from about 0.01% w/w to about 50% w/w sulfated surfactant, from about 0.01% w/w to about 70% w/w C₈₋₂₀ alkoxylated alcohol, and from about 0.01% w/w to about 50% w/w sorbitan derivative based on the total weight of the EC composition.

An EC composition as disclosed herein may comprise from about 1% w/w to about 60% w/w of an aryloxyphenoxy propionic acid herbicide and 1% w/w to about 50% w/w of a surfactant blend, wherein the surfactant blend comprises from about 1% w/w to about 50% w/w sulfated surfactant, from about 1% w/w to about 50% w/w C₈₋₂₀ alkoxylated alcohol, and from about 1% w/w to about 40% w/w sorbitan derivative based on the total weight of the EC composition.

An EC composition as disclosed herein may comprises from about 10% w/w to about 50% w/w of an aryloxyphenoxy propionic acid herbicide and about 10% w/w to about 50% w/w of a surfactant blend, wherein the surfactant blend comprises from about 10% w/w to about 50% w/w sulfated surfactant, from about 10% w/w to about 50% w/w C₈₋₂₀ alkoxylated alcohol, and from about 0.01% w/w to about 70% w/w sorbitan derivative based on the total weight of the EC composition.

A process for the preparation of an EC composition as disclosed herein may comprise:
mixing an aryloxyphenoxy propionate herbicide, an acid, ester or derivative thereof, or a combination thereof and a solvent to prepare a first mixture;
adding a surfactant blend to the first mixture to obtain a second mixture, wherein the surfactant blend comprises a sulfated surfactant, a C₈₋₂₀ alkoxylated alcohol, and a sorbitan derivative; and
milling the second mixture to obtain an emulsifiable concentrate composition,
wherein a weight ratio of the aryloxyphenoxy propionate herbicide to the surfactant blend ranges from 1:0.9 to 1:5.

A process for the preparation of an EC composition as disclosed herein may comprise:
mixing quizalofop-P-tefuryl, a solvent, and a surfactant blend comprising a sulfated surfactant, a C₈₋₂₀ alkoxylated alcohol, and a sorbitan derivative to prepare a first mixture;
agitating the first mixture to prepare the emulsifiable concentrate composition; and
packaging the resulting emulsifiable concentrate composition.
The present invention provides a process for preparing an emulsifiable concentrate composition, the process comprising:
mixing an aryloxyphenoxy propionate herbicide, or an acid or ester thereof, or a combination thereof, and a solvent to prepare a first mixture, wherein the aryloxyphenoxy propionate herbicide is quizalofop;
adding a surfactant blend to the first mixture to obtain a second mixture, wherein the surfactant blend comprises a sulfated surfactant, a C₈₋₂₀ alkoxylated alcohol, and a sorbitan derivative, which sorbitan derivative comprises a sorbitan ester, an ethoxylated sorbitan ester, or a combination thereof; and
milling the second mixture to obtain the emulsifiable concentrate composition,
wherein weight ratio of the aryloxyphenoxy propionate herbicide, or acid or ester thereof, or combination thereof, to the surfactant blend in the emulsifiable concentrate composition ranges from 1:0.9 to 1:5.

According to an embodiment of the present invention, the process further comprises heating the aryloxyphenoxy propionate herbicide, salt, ester or derivative thereof at a temperature above the melting point of the aryloxyphenoxypropionate herbicide, salt, ester or derivative thereof to liquify the aryloxyphenoxy propionate herbicide, salt, ester or derivative thereof before mixing it to the solvent.

According to an embodiment, quizalofop, an acid, ester and/or derivative thereof is first heated at a temperature greater than 60°C to liquify the quizalofop and/or acid, ester or derivative thereof before mixing it with the solvent.

According to an embodiment, the process for the preparation of an EC composition employs continuous heating to the mixing vessel to avoid solidification of aryloxyphenoxy propionate herbicide, its acid, ester and derivatives thereof.

According to an embodiment, the surfactant blend is obtained by mixing the sulfated surfactant, the C₈₋₂₀ alkoxylated alcohol, and the sorbitan derivative under low shear.

According to an embodiment, the surfactant blend is obtained by dissolving the sulfated surfactant, the C₈₋₂₀ alkoxylated alcohol, and the sorbitan derivative in a solvent under low shear.

A method of controlling undesirable vegetation as disclosed herein may comprise contacting the undesirable vegetation or a locus thereof with a herbicidally effective amount of an EC composition, wherein the EC composition comprises:
an aryloxyphenoxy propionate herbicide, an acid, ester or derivative thereof or combination thereof; and
a surfactant blend comprising a sulfated surfactant, a C₈₋₂₀ alkoxylated alcohol, and a sorbitan derivative;
wherein the ratio of the aryloxyphenoxy propionate herbicide to the surfactant blend ranges from 1: 0.9 to 1:5, or from 1: 0.9 to 1:5.

The end-use formulations may be prepared by dilution of the EC composition with water, at a dilution of about 1 to about 10,000, or about 10 to about 1,000, of the total weight of the EC composition to form the spray formulation. The EC composition may be diluted for use to provide a spray formulation having an agrochemical active concentration of about 0.1 wt.% to about 10wt.%.

A method of controlling undesirable vegetation as disclosed herein may comprise contacting the herbicidally effective amount of an EC composition with the vegetation or locus thereof, wherein the emulsifiable concentrate composition comprises:
quizalofop-P-tefuryl; and
a surfactant blend comprising a sulfated surfactant, a C₈₋₂₀ alkoxylated alcohol, and a sorbitan derivative;
wherein the ratio of quizalofop-P-tefuryl to the surfactant blend ranges from 1: 0.9 to 1:5.

The disclosed herbicidal composition can be used as a herbicide.

An EC composition as disclosed herein can be used to control a wide range of undesirable vegetation, specifically, a wide range of weeds.

An EC composition as disclosed herein can be used to control a broad spectrum of annual and perennial weeds.

An EC composition as disclosed herein can be formulated for use by dilution with water or a water-based liquid to form an end-use agrochemical formulation, for example, a spray formulation.

According to an embodiment, the EC composition has a pH of 5-7, or a pH of 5.5 to 6.8.

According to an embodiment, the EC composition has a pH variation no greater than 20% after storage at 54°C for 24 hours to 28 days.

An EC composition as disclosed herein can be applied in a form that allows the active compounds to be taken up by the plants.

An EC composition as disclosed herein can be a source of active agrochemical ingredients and may be diluted to form an end-use formulation, for example, a spray formulation. The end-use formulations may be prepared by dilution of the EC composition with water, at a dilution of about 1 to about 10,000, or about 10 to about 1,000, of the total weight of the EC composition to form the spray formulation. The EC composition may be diluted for use to provide a spray formulation having an agrochemical active concentration of about 0.5 wt.% to about 1 wt.%. In said diluted composition the agrochemical active concentration may be in the range from about 0.001 wt.% to about 1 wt.% based on the total formulation as sprayed.

Spray formulations include all the components which are desired to apply to the plants or to their environment. Spray formulations can be prepared by simple dilution of the EC composition containing the agrochemically active ingredients, by mixing together the individual agrochemically active ingredients, or a combination of diluting an EC composition and adding additional individual agrochemically active ingredients or mixtures of agrochemically active ingredients. Typically, such end use mixing is carried out in the tank from which the formulation is sprayed, or alternatively in a holding tank for filling the spray tank. Such mixing and mixtures are typically termed tank mixing and tank mixtures.

The various components of the EC composition can be used individually or already partially or completely mixed with one another to prepare the emulsifiable concentrate composition. It is also possible for the component to be separately packaged and used as a component in a kit of parts.

Kits may include one or more of the components that are used to prepare an EC composition. For examples, the kits may include active ingredients and/or surfactant blend. One or more of the components may already be combined together or pre-formulated.

A kit as disclosed herein may comprise a stable agrochemical composition. The kit may comprise a plurality of components, including at least one of the ingredients of the stable herbicidal composition of the present disclosure.

A kit as disclosed herein may include at least one, or all of components needed to prepare the stable herbicidal composition. For example, the kit may include the aryloxyphenoxy propionate herbicide, an acid, ester or derivative thereof, or a combination thereof; and a surfactant blend comprising a sulfated surfactant, a C₈₋₂₀ alkoxylated alcohol, and a sorbitan derivative.

One or more of the components may already be combined together or pre-formulated. Where more than two components are provided in a kit as disclosed herein, the components may already be combined and as such are packaged in a single container such as a vial, bottle, can, pouch, bag and/or canister.

Two or more components of a kit may be packaged separate from one another, i.e., they are not pre-formulated. As such, a kit as disclosed herein may include one or more separate containers such as vials, cans, bottles, pouches, bags and/or canisters, each container containing a separate component of the stable herbicidal composition.

In both forms, an individual component of a kit as disclosed herein may be applied separate from or together with the other components of the kit or as a component of a combination composition.

The compositions described herein are herbicidally efficacious and are stable. It has been found that the disclosed surfactant blend provides excellent stability over time and at various temperatures to the aryloxyphenoxy propionate herbicide, even when the EC composition is subjected to a shear force (for example on mixing). Also, the stable agrochemical composition obtained by the disclosed process have superior suspensibility, better increased, very little or no sedimentation, and minimal particle degradation.

It will be understood that all tests and physical properties listed have been determined at atmospheric pressure and room temperature (i.e. 25°C), unless otherwise stated herein, or unless otherwise stated in the referenced test methods and procedures.

### EXAMPLES

The disclosure will be illustrated with reference to the following examples:

### Example 1: Preparation of Quizalofop-P-tefuryl 40g/L Emulsifiable Concentrate (EC).

The materials in Table 1 were used to prepare the herbicide composition of Example 1.

**Table 1**

| Ingredient | Quantity (g/L) |
|---|---|
| Quizalofop-P-tefuryl | 41.49 |
| C₈₋₁₀ methyl caprylate-caprate | 254.6 |
| White mineral oil | 359.9 |
| Calcium dodecyl benzenesulfonic acid (CaDDBS) | 28 |
| Lauryl alcohol ethoxylate | 88 |
| Polyoxyethylene sorbitan monooleate | 44 |
| Monopropylene glycol | 10 |
| Dibasic ester solvent | 80 |
| Silicone | 0.025 |
| TOTAL | 906.02 |

41.49 grams (g) of quizalofop-P-tefuryl was melted first and then mixed with 254.6 g of the solvent C₈₋₁₀ methyl caprylate-caprate in a mixing vessel. A surfactant blend was prepared by combining 28 g lauryl alcohol ethoxylate, 88 g CaDDBS and 44 g polyoxyethylene sorbitan monooleate under low shear and added to the vessel. To the same mixing vessel, 359.9 g white mineral oil, 10 g monopropylene glycol, 80 g dibasic ester solvent and 0.025 g silicone as the antifoam were added under low shear agitation to obtain a homogeneous mixture. The mixing vessel continuously agitated the mixture for 2 hours to obtain a final emulsifiable concentrate composition.

### Example 2: Preparation of Quizalofop-P-tefuryl, 40g/L Emulsifiable Concentrate (EC).

The materials in Table 2 were used to prepare the herbicide composition of Example 2.

**Table 2**

| Ingredient | Quantity (g/L) |
|---|---|
| Quizalofop-P-tefuryl (technical 96.4%) | 41.49 |
| C₈₋₁₀ methyl caprylate-caprate | 257.6 |
| White mineral oil | 359.9 |
| CaDDBS | 48.0 |
| Lauryl alcohol ethoxylate | 64.0 |
| Polyoxyethylene sorbitan monooleate | 48.0 |
| Monopropylene glycol | 10 |
| Dibasic ester solvent | 80 |
| Silicone | 0.025 |
| TOTAL | 909.0 |

Quizalofop-P-tefuryl, C₈₋₁₀ methyl caprylate-caprate solvent, a surfactant blend comprising lauryl alcohol ethoxylate, CaDDBS and polyoxyethylene sorbitan monooleate, white mineral oil, monopropylene glycol, dibasic ester solvent, and silicone as the antifoam were added in the quantities shown in Table 2 to obtain an emulsifiable concentrate composition as per the process of Example-1.

### Example 3: Preparation of Quizalofop-P-tefuryl 40g/L Emulsifiable Concentrate (EC).

The materials in Table 3 were used to prepare the herbicide composition of Example 3.

**Table 3**

| Ingredient | Quantity (g/L) |
|---|---|
| Quizalofop-P-tefuryl (technical 96.4%) | 41.49 |
| C₈₋₁₀ methyl caprylate-caprate | 257.6 |
| White mineral oil | 359.9 |
| CaDDBS | 16.0 |
| Lauryl alcohol ethoxylate | 112.0 |
| polyoxyethylene sorbitan monooleate | 32.0 |
| Monopropylene glycol | 10 |
| Dibasic ester solvent | 80 |
| Silicone | 0.025 |
| TOTAL | 909.0 |

Quizalofop-P-tefuryl, C₈₋₁₀ Methyl Caprylate-Caprate solvent, a surfactant blend comprising Lauryl alcohol ethoxylate, CaDDBS, and polyoxyethylene sorbitan monooleate, white mineral oil, monopropylene glycol, dibasic ester solvent, and silicone as the antifoam were added in quantities shown in Table 3 to obtain emulsifiable concentrate composition as per the process of Example-1.

### Example 4: Surfactant screening study.

Various anionic and non-ionic surfactants were tested alone and in various combinations before arriving at a robust surfactant blend that contributes to a stable emulsion at room temperature, and which provides cold temperature stability too. After deriving the optimal weight ratio of the active ingredient to the surfactant blend, various anionic and non-ionic surfactants were tested to evaluate its effect on the finished emulsion.

The present disclosure provides the rationale behind the selection of the surfactants used in the herbicide compositions. This Example provides for a comparative analysis of the emulsion stability of the composition of Example 1 versus comparative compositions designated as A, B, C, D, and E each consisting of different surfactants. To prepare the formulations A, B, C, D, and E, the ingredients in Example-1, with the exception of the surfactant blend, were kept the same and the optimal ratio of the herbicide to the surfactant blend was determined. The compositions for the purpose of comparing emulsion stability were developed by keeping the ingredients of Example-1 constant and combining various surfactants within the optimal ratio.

A ratio was identified for each of the surfactants while developing the composition and the same was utilized to provide a combination of surfactants. As shown in Table 4, the sulphated surfactant, the C₈₋₂₀ alcohol ethoxylates or the sorbitan esters were unable to achieve the requisite emulsion stability when used alone. Various other surfactants that were also tried such as phosphate ester, ethoxylated vegetable oil, polyalkylene glycol ether, however, these surfactants also failed to stabilize the emulsion comprising quizalofop-P-tefuryl. (Table-4). The emulsion stability was tested at 30°C.

**Table 4: Surfactant screening**

| Surfactants (g/L) | 1 | A | B | C | D | E |
|---|---|---|---|---|---|---|
| Sulfated surfactants | 28 | - | - | - | - | - |
| C₈₋₂₀ alcohol ethoxylate | 88 | - | 160 | - | - | - |
| Sorbitan ester | 44 | 160 | - | - | - | - |
| Phosphate ester | - | - | - | 160 | - | - |
| Ethoxylated vegetable oil | - | - | - | - | 160 | - |
| Polyalkylene glycol ether | - | - | - | - | -- | 160 |
| Stability observations | | | | | | |
| Emulsion Appearance after 30 min | Ok | Ok | Ok | Ok | Ok | Ok |
| Emulsion Appearance after 2 hours | Ok | Phase Separation | Phase Separation | Phase Separation | Phase Separation | Phase Separation |

| | | | | | | |
|---|---|---|---|---|---|---|
| The term 'OK' describes the emulsion appearance of the compositions and indicates the absence of phase separation. | | | | | | |

### Example 5: Stability of formulations containing quizalofop-P-tefuryl and stability of product on dilution.

The EC composition of Example-1 was prepared as described above and the finished EC composition was visually inspected. The finished EC composition of Example-1 appeared as homogeneous yellowish limpid (clear) liquid. Following storage for 7 days at -10°C, the EC composition was found to contain about 0.05% deposit and became homogeneous limpid liquid after gentle shaking. After 14 days storage at 54°C, the composition remained a yellowish limpid liquid with a trace of hazy deposit and became a homogeneous limpid liquid after gentle shaking. (Table-5)

**Table 5**

| Visual Inspection of Quizalofop-P-tefuryl EC composition | | |
|---|---|---|
| Initial | 7 Days @-10°C | 14 Days @54°C |
| Homogeneous | 0.05% deposit. | Yellowish limpid liquid with a trace of hazy deposit. As initial after shaking |
| Yellowish | As initial after shaking. | |
| Limpid | | |
| Liquid | | |

The EC composition of Example-1 was prepared as described above, and the stability of quizalofop-P-tefuryl in the EC composition, as well as stability of the emulsion after dilution, were evaluated.

It was found that the EC compositions of Example-1 remained stable at 0 days following preparation under ambient conditions i.e., just after preparation. The stability of the EC compositions were also evaluated after storage for 14 days under Accelerated Heat Stability (AHS) conditions (at 54°C) and under low temperature conditions (at -10°C). As shown in Table 6, degradation of quizalofop-P-tefuryl degradation was within an acceptable range in both AHS and at low temperature conditions.

Emulsion stability upon dilution was also studied. Three different dilutions of the composition of Example-1 were prepared in water: 0.1% v/v, 2% v/v, and 2.4% v/v. The composition of Example-1 remained stable in all three dilutions after 1 hour and after 24 hours following dilution, when stored at either. After 1 hour and 24 hours, creaming remained under control, i.e. lesser than 1ml. This infers high stability of emulsion at end-use. A slight change was observed in the pH of the composition of Example-1 following storage under AHS conditions, but was within the acceptable limit. (Table-6)

**Table-6**

| **Ex.** | **Initial 0 days** | **14 days (Quizalofop-P-tefuryl Recovery)** | | | **Emulsion Stability (Upon dilution) 0.1 % v/v in 342 ppm SHW*** | | **Emulsion Stability (Upon dilution) 2% v/v in 342 ppm SHW** | | **Emulsion Stability (Upon dilution) 2.4% v/v in 342 ppm SHW** | | **pH 1%** | |
|---|---|---|---|---|---|---|---|---|---|---|---|---|
| | **% AI** | **% AI -10°C** | **% AI 54°C** | **% Change** | **1 Hour** | **24 Hours** | **1 Hour** | **24 Hours** | **1 Hour** | **24 Hours** | **Initi al** | **14D 54° C** |
| Ex.-1 | 4.42 | N.A. | 4.41 | -0.2 | Trac e of crea m | Trace of crea m | Trace of crea m | 0.4 mL crea m | Trace of cream | Trace of cream | 6.7 | 5.7 |

| | | | | | | | | | | | | |
|---|---|---|---|---|---|---|---|---|---|---|---|---|
| *SHW = standard hard water. | | | | | | | | | | | | |

The term 'OK' describes the emulsion appearance of the composition having optical clarity and indicates homogeneous clear/limpid liquid without any phase separation.

Therefore, the inventors have successfully developed a stable emulsifiable concentrate composition including an aryloxyphenoxypropionate herbicide through the use of a surfactant blend comprising a sulfated surfactant, a C₈₋₂₀ alkoxylated alcohol, and a sorbitan derivative, in which the proportion of the aryloxyphenoxy propionic herbicide to the surfactant blend is maintained at a defined ratio. In particular, the surfactant blend successfully stabilized the aryloxyphenoxy propionic acid herbicide, quizalofop-P-tefuryl in the composition. In addition, the surfactant blend also imparted stability to the diluted emulsion for end-use.

## Claims

1. A stable herbicide composition comprising:
an aryloxyphenoxy propionate herbicide, an acid or ester thereof, or a combination thereof, wherein the aryloxyphenoxypropionate herbicide is quizalofop; and
a surfactant blend comprising a sulfated surfactant, a C₈₋₂₀ alkoxylated alcohol, and a sorbitan derivative, which sorbitan derivative comprises a sorbitan ester, an ethoxylated sorbitan ester, or a combination thereof;
wherein weight ratio of the aryloxyphenoxy propionate herbicide to the surfactant blend ranges from 1:0.5 to 1: 10.

2. The stable herbicide composition as claimed in claim 1, wherein the aryloxyphenoxy propionate herbicide comprises quizalofop-P-ethyl, quizalofop-P-tefuryl, or a combination thereof.

3. The stable herbicide composition as claimed in claim 1, wherein the sulfated surfactant comprises benzene sulfonic acid, dodecyl benzene sulfonic acid, dodecyl sulfonates, dodecyl sulfate, C₁₃/C₁₅ alcohol ether sulfonate, dioctylsulfosuccinate, isopropylnaphthalene sulfonate, methylene bisnaphthalene sulfonate, a salt thereof, or a combination thereof; preferably wherein the sulfated surfactant is a salt of dodecyl benzene sulfonic acid.

4. The stable herbicide composition as claimed in claim 1, wherein the C₈₋₂₀ alkoxylated alcohols comprises a non-ionic linear or branched alcohol ethoxylate surfactant comprising a C₁₀₋₁₄, ethoxylated alcohol; lauryl alcohol ethoxylate; a C₁₀₋₁₆, ethoxylated alcohol; a C₁₂₋₁₅, ethoxylated alcohol; a C₁₄₋₁₈, ethoxylated alcohol; a C₁₂₋₁₄, ethoxylated propoxylated alcohol;, a C₁₂₋₁₅, ethoxylated propoxylated alcohol; a C₁₁₋₁₅-secondary, ethoxylated propoxylated alcohol; a tridecyl alcohol branched alcohol ethoxylate; octylphenol ethoxylate; a nonylphenol C₁-C₁₀-alkoxylate; or a combination thereof.

5. The stable herbicide composition as claimed in claim 1, wherein the sorbitan ester comprises sorbitan monostearate, sorbitan tristearate, polysorbate 20, polysorbate 60, polysorbate 65, polysorbate 80, or a combination thereof.

6. The stable herbicide composition as claimed in claim 1, wherein the surfactant blend comprises from 0.01% w/w to 50% w/w of the sulfated surfactant, 0.01% w/w to 50% w/w of the C₈₋₂₀ alkoxylated alcohol, and 0.01% w/w to 50% w/w of the sorbitan derivative, based on the total weight of the surfactant blend.

7. The stable herbicide composition as claimed in claim 6, wherein the surfactant blend comprises: from 1% w/w to 20% w/w of the sulfated surfactant, 5% w/w to 20% w/w of the C₈₋₂₀ alkoxylated alcohol, and 1% w/w to 10% w/w of the sorbitan derivative, based on the total weight of the surfactant blend.

8. The stable herbicide composition as claimed in claim 1, wherein the composition is an emulsifiable concentrate.

9. The stable herbicide composition as claimed in claim 1, wherein the composition further comprises a solvent.

10. The stable herbicide composition as claimed in claim 9, wherein the solvent comprises a N,N-dialkyl (C₁-C₁₀) fatty acid amide, a cyclohexanone, a dibasic ester, a glycol ether C₁-C₁₀-alkylene carbonate, a ketone, a C₁-C₁₀ alkyl lactate, a C₁-C₁₀ alkyl carbonate, a polyethylene glycol, a polyethylene glycol alkyl ether, an aromatic hydrocarbon, a mineral oil, a C_{6-C14} fatty acid ester solvent which comprises a plant oil, or a combination thereof.

11. The stable herbicide composition as claimed in claim 1, wherein the weight ratio of the aryloxyphenoxy propionate herbicide, or acid or ester thereof, to the surfactant blend are ranges from 1:0.9 to 1:5.

12. The stable herbicide composition as claimed in claim 1, wherein the weight ratio of the aryloxyphenoxy propionate herbicide, or acid or ester thereof, to the surfactant blend is 1:4.

13. The emulsifiable concentrate as claimed in claim 8, wherein the surfactant blend comprises
a) a sulphated surfactant comprising a salt of dodecyl benzene sulfonic acid,
b) a C₈₋₂₀ alkoxylated alcohol comprising lauryl alcohol ethoxylate, and
c) a sorbitan derivative comprising polyoxyethylene sorbitan monooleate.

14. A process for preparing an emulsifiable concentrate composition, the process comprising:
mixing an aryloxyphenoxy propionate herbicide, or an acid or ester thereof, or a combination thereof, and a solvent to prepare a first mixture, wherein the aryloxyphenoxy propionate herbicide is quizalofop;
adding a surfactant blend to the first mixture to obtain a second mixture, wherein the surfactant blend comprises a sulfated surfactant, a C₈₋₂₀ alkoxylated alcohol, and a sorbitan derivative, which sorbitan derivative comprises a sorbitan ester, an ethoxylated sorbitan ester, or a combination thereof; and
milling the second mixture to obtain the emulsifiable concentrate composition,
wherein weight ratio of the aryloxyphenoxy propionate herbicide, or acid or ester thereof, or combination thereof, to the surfactant blend in the emulsifiable concentrate composition ranges from 1:0.9 to 1:5.

15. The process as claimed in claim 14, further comprising heating the aryloxyphenoxy propionate herbicide, or acid or ester thereof, or combination thereof, at a temperature greater than the melting point of the aryloxyphenoxy propionate herbicide, or acid or ester thereof, to liquify the aryloxyphenoxy propionate herbicide, or acid or ester thereof, wherein the heating is performed before the mixing with the solvent.

16. A method of controlling undesirable vegetation comprising contacting the vegetation or a locus thereof with a herbicidally effective amount of an emulsifiable concentrate composition,
wherein the emulsifiable concentrate composition comprises: an aryloxyphenoxy propionate herbicide, or an acid or ester thereof, or a combination thereof, wherein the aryloxyphenoxy propionate herbicide is quizalofop; and a surfactant blend comprising a sulfated surfactant, a C₈₋₂₀ alkoxylated alcohol, and a sorbitan derivative, which sorbitan derivative comprises a sorbitan ester, an ethoxylated sorbitan ester, or a combination thereof, wherein weight ratio of the aryloxyphenoxy propionate herbicide, or the acid or ester thereof, or combination thereof, to the surfactant blend ranges from 1:0.5 to 1:10.

17. The method as claimed in claim 16, wherein the emulsifiable concentrate composition comprises quizalofop-p-tefuryl and the weight ratio of the quizalofop-p-tefuryl herbicide to the surfactant blend ranges from 1: 0.9 to 1:5.

## Patentansprüche

1. Stabile Herbizidzusammensetzung, umfassend:
ein Aryloxyphenoxypropionat-Herbizid, eine Säure oder einen Ester davon oder eine Kombination davon, wobei das Aryloxyphenoxypropionat-Herbizid Quizalofop ist; und
eine Tensidmischung, umfassend ein sulfatiertes Tensid, einen alkoxylierten C₈₋₂₀-Alkohol und ein Sorbitanderivat, wobei das Sorbitanderivat einen Sorbitanester, einen ethoxylierten Sorbitanester oder eine Kombination davon umfasst;
wobei das Gewichtsverhältnis des Aryloxyphenoxypropionat-Herbizids zu der Tensidmischung im Bereich von 1:0,5 bis 1:10 liegt.

2. Stabile Herbizidzusammensetzung nach Anspruch 1, wobei das Aryloxyphenoxypropionat-Herbizid Quizalofop-P-ethyl, Quizalofop-P-tefuryl oder eine Kombination davon umfasst.

3. Stabile Herbizidzusammensetzung nach Anspruch 1, wobei das sulfatierte Tensid Benzolsulfonsäure, Dodecylbenzolsulfonsäure, Dodecylsulfonate, Dodecylsulfat, C₁₃/C₁₅-Alkoholethersulfonat, Dioctylsulfosuccinat, Isopropylnaphthalinsulfonat, Methylenbisnaphthalinsulfonat, ein Salz davon oder eine Kombination davon umfasst; wobei das sulfatierte Tensid vorzugsweise ein Salz von Dodecylbenzolsulfonsäure ist.

4. Stabile Herbizidzusammensetzung nach Anspruch 1, wobei die alkoxylierten C₈₋₂₀-Alkohole ein nichtionisches, lineares oder verzweigtes Alkoholethoxylat-Tensid umfassen, das Folgendes umfasst: einen ethoxylierten C₁₀₋₁₄-Alkohol, Laurylalkoholethoxylat; einen ethoxylierten C₁₀₋₁₆-Alkohol, einen ethoxylierten C₁₂₋₁₅-Alkohol, einen ethoxylierten C₁₄₋₁₈-Alkohol; einen ethoxylierten propoxylierten C₁₂₋₁₄-Alkohol; einen ethoxylierten propoxylierten C₁₂₋₁₅-Alkohol, einen sekundären, ethoxylierten propoxylierten C₁₁₋₁₅-Alkohol, ein verzweigtes Tridecylalkohol-Alkoholethoxylat; Octylphenolethoxylat; ein Nonylphenol-C₁-C₁₀-alkoxylat; oder eine Kombination davon.

5. Stabile Herbizidzusammensetzung nach Anspruch 1, wobei der Sorbitanester Sorbitanmonostearat, Sorbitantristearat, Polysorbat 20, Polysorbat 60, Polysorbat 65, Polysorbat 80 oder eine Kombination davon umfasst.

6. Stabile Herbizidzusammensetzung nach Anspruch 1, wobei die Tensidmischung 0,01 % Gew./Gew. bis 50 % Gew./Gew. des sulfatierten Tensids, 0,01 % Gew./Gew. bis 50 % Gew./Gew. des alkoxylierten C₈₋₂₀-Alkohols und 0,01 % Gew./Gew. bis 50 % Gew./Gew. des Sorbitanderivats, bezogen auf das Gesamtgewicht der Tensidmischung, umfasst.

7. Stabile Herbizidzusammensetzung nach Anspruch 6, wobei die Tensidmischung Folgendes umfasst: 1 % Gew./Gew. bis 20 % Gew./Gew. des sulfatierten Tensids, 5 % Gew./Gew. bis 20 % Gew./Gew. des alkoxylierten C₈₋₂₀-Alkohols und 1 % Gew./Gew. bis 10 % Gew./Gew. des Sorbitanderivats, bezogen auf das Gesamtgewicht der Tensidmischung.

8. Stabile Herbizidzusammensetzung nach Anspruch 1, wobei die Zusammensetzung ein emulgierbares Konzentrat ist.

9. Stabile Herbizidzusammensetzung nach Anspruch 1, wobei die Zusammensetzung außerdem ein Lösungsmittel umfasst.

10. Stabile Herbizidzusammensetzung nach Anspruch 9, wobei das Lösungsmittel Folgendes umfasst: ein N,N-Dialkyl(C₁-C₁ₒ)fettsäureamid, ein Cyclohexanon, einen dibasischen Ester, ein Glykolether-C₁-C₁₀-alkylencarbonat, ein Keton, ein C₁-C₁₀-Alkyllactat, ein C₁-C₁₀-Alkylcarbonat, ein Polyethylenglycol, ein Polyethylenglycolalkylether, einen aromatischen Kohlenwasserstoff, ein Mineralöl, ein C_{6-C14}-Fettsäureester-Lösungsmittel, das ein Pflanzenöl umfasst, oder eine Kombination davon.

11. Stabile Herbizidzusammensetzung nach Anspruch 1, wobei das Gewichtsverhältnis des Aryloxyphenoxypropionat-Herbizids oder der Säure oder des Esters davon zu der Tensidmischung im Bereich von 1:0,9 bis 1:5 liegt.

12. Stabile Herbizidzusammensetzung nach Anspruch 1, wobei das Gewichtsverhältnis des Aryloxyphenoxypropionat-Herbizids oder der Säure oder des Esters davon zu der Tensidmischung 1:4 ist.

13. Emulgierbares Konzentrat nach Anspruch 8, wobei die Tensidmischung Folgendes umfasst:
a) ein sulfatiertes Tensid, das ein Salz von Dodecylbenzolsulfonsäure umfasst,
b) einen alkoxylierten C₈₋₂₀-Alkohol, der Laurylalkoholethoxylat umfasst, und
c) ein Sorbitanderivat, das Polyoxyethylensorbitanmonooleat umfasst.

14. Verfahren zur Herstellung einer emulgierbaren Konzentratzusammensetzung, wobei das Verfahren Folgendes umfasst:
Mischen eines Aryloxyphenoxypropionat-Herbizids oder einer Säure oder eines Esters davon oder einer Kombination davon und eines Lösungsmittels, um eine erste Mischung herzustellen, wobei das Aryloxyphenoxypropionat-Herbizid Quizalofop ist;
Hinzufügen einer Tensidmischung zu der ersten Mischung, um eine zweite Mischung zu erhalten, wobei die Tensidmischung ein sulfatiertes Tensid, einen alkoxylierten C₈₋₂₀-Alkohol und ein Sorbitanderivat umfasst, wobei das Sorbitanderivat einen Sorbitanester, einen ethoxylierten Sorbitanester oder eine Kombination davon umfasst; und
Mahlen der zweiten Mischung, um die emulgierbare Konzentratzusammensetzung zu erhalten,
wobei das Gewichtsverhältnis des Aryloxyphenoxypropionat-Herbizids oder der Säure oder des Esters davon oder einer Kombination davon zu der Tensidmischung in der emulgierbaren Konzentratzusammensetzung im Bereich von 1:0,9 bis 1:5 liegt.

15. Verfahren nach Anspruch 14, ferner umfassend das Erhitzen des Aryloxyphenoxypropionat-Herbizids oder der Säure oder des Esters davon oder einer Kombination davon auf eine Temperatur, die höher ist als der Schmelzpunkt des Aryloxyphenoxypropionat-Herbizids oder der Säure oder des Esters davon, um das Aryloxyphenoxypropionat-Herbizid oder die Säure oder den Ester davon zu verflüssigen, wobei das Erhitzen vor dem Mischen mit dem Lösungsmittel durchgeführt wird.

16. Verfahren zur Bekämpfung unerwünschter Vegetation, umfassend das Inkontaktbringen der Vegetation oder eines Gebietes davon mit einer herbizid wirksamen Menge einer emulgierbaren Konzentratzusammensetzung,
wobei die emulgierbare Konzentratzusammensetzung Folgendes umfasst: ein Aryloxyphenoxypropionat-Herbizid oder eine Säure oder einen Ester davon oder eine Kombination davon, wobei das Aryloxyphenoxypropionat-Herbizid Quizalofop ist; und eine Tensidmischung, umfassend ein sulfatiertes Tensid, einen alkoxylierten C₈₋₂₀-Alkohol und ein Sorbitanderivat, wobei das Sorbitanderivat einen Sorbitanester, einen ethoxylierten Sorbitanester oder eine Kombination davon umfasst, wobei das Gewichtsverhältnis des Aryloxyphenoxypropionat-Herbizids oder der Säure oder des Esters davon oder einer Kombination davon zu der Tensidmischung im Bereich von 1:0,5 bis 1:10 liegt.

17. Verfahren nach Anspruch 16, wobei die emulgierbare Konzentratzusammensetzung Quizalofop-p-tefuryl umfasst und das Gewichtsverhältnis des Quizalofop-p-tefuryl-Herbizids zu der Tensidmischung im Bereich von 1:0,9 bis 1:5 liegt.

## Revendications

1. Composition herbicide stable, comprenant :
un herbicide aryloxyphénoxy-propionate, un acide ou un ester de celui-ci, ou une combinaison de ceux-ci, dans lequel l'herbicide aryloxyphénoxy-propionate est quizalofop ; et
un mélange surfactant comprenant un surfactant sulfaté, un alcool alkoxylé C₈₋₂₀, et un dérivé de sorbitane, lequel dérivé de sorbitane comprend un ester de sorbitane, un ester de sorbitane éthoxylé, ou une combinaison de ceux-ci ;
dans lequel le rapport pondéral de l'herbicide aryloxyphénoxy-propionate par rapport au mélange surfactant varie de 1 : 0,5 à 1 : 10.

2. Composition herbicide stable telle que revendiquée dans la revendication 1, dans lequel l'herbicide aryloxyphénoxy-propionate comprend quizalofop-P-éthyle, quizalofop-P-téfuryle, ou une combinaison de ceux-ci.

3. Composition herbicide stable telle que revendiquée dans la revendication 1, dans lequel le surfactant sulfaté comprend acide sulfonique de benzène, acide sulfonique de dodécylbenzène, sulfonates de dodécyle, sulfate de dodécyle, sulfonate d'éther d'alcool C₁₃/C₁₅, dioctylsulfosuccinate, sulfonate d'isopropylnaphtalène, sulfonate de méthylène-bisnaphtalène, un sel de ceux-ci, ou une combinaison de ceux-ci ; de préférence dans lequel le surfactant sulfaté est un sel d'acide sulfonique de dodécylbenzène.

4. Composition herbicide stable telle que revendiquée dans la revendication 1, dans lequel l'alcool alkoxylé C₈₋₂₀ comprend un surfactant éthoxylate d'alcool linéaire ou ramifié non ionique comprenant un alcool éthoxylé C₁₀₋₁₄ ; éthoxylate d'alcool laurylique ; un alcool éthoxylé C₁₀₋₁₆ ; un alcool éthoxylé C₁₂₋₁₅ ; un alcool éthoxylé C₁₄₋₁₈ ; un alcool propoxylé éthoxylé C₁₂₋₁₄ ; un alcool propoxylé éthoxylé C₁₂₋₁₅ ; un alcool propoxylé éthoxylé C₁₁₋₁₅-secondaire ; un éthoxylate d'alcool ramifié d'alcool tridécylique ; éthoxylate d'octylphénol ; un nonylphénol C₁-C₁₀-alkoxylate ; ou une combinaison de ceux-ci.

5. Composition herbicide stable telle que revendiquée dans la revendication 1, dans lequel l'ester de sorbitane comprend monostéarate de sorbitane, tristéarate de sorbitane, polysorbate 20, polysorbate 60, polysorbate 65, polysorbate 80, ou une combinaison de ceux-ci.

6. Composition herbicide stable telle que revendiquée dans la revendication 1, dans lequel le mélange surfactant comprend de 0,01 % p/p à 50 % p/p du surfactant sulfaté, de 0,01 % p/p à 50 % p/p de l'alcool alkoxylé C₈₋₂₀, et de 0,01 % p/p à 50 % p/p du dérivé de sorbitane, sur la base du poids total du mélange surfactant.

7. Composition herbicide stable telle que revendiquée dans la revendication 6, dans lequel le mélange surfactant comprend : de 1 % p/p à 20 % p/p du surfactant sulfaté, de 5 % p/p à 20 % p/p de l'alcool alkoxylé C₈₋₂₀, et de 1 % p/p à 10 % p/p du dérivé de sorbitane, sur la base du poids total du mélange surfactant.

8. Composition herbicide stable telle que revendiquée dans la revendication 1, dans lequel la composition est un concentré émulsifiable.

9. Composition herbicide stable telle que revendiquée dans la revendication 1, dans lequel la composition comprend en outre un solvant.

10. Composition herbicide stable telle que revendiquée dans la revendication 9, dans lequel le solvant comprend un amide d'acide gras de N,N-dialkyle (C₁-C₁₀), un cyclohexanone, un ester dibasique, un éther de glycol C₁-C₁₀-carbonate d'alkylène, une cétone, un lactate d'alkyle C₁-C₁₀, un carbonate d'alkyle C₁-C₁₀, un polyéthylène glycol, un éther d'alkyle de polyéthylène glycol, un hydrocarbure aromatique, une huile minérale, un solvant ester d'acide gras C₆₋₁₄ qui comprend une huile végétale, ou une combinaison de ceux-ci.

11. Composition herbicide stable telle que revendiquée dans la revendication 1, dans lequel le rapport pondéral de l'herbicide aryloxyphénoxy-propionate, ou de l'acide ou de l'ester de celui-ci, par rapport au mélange surfactant varie de 1 : 0,9 à 1 : 5.

12. Composition herbicide stable telle que revendiquée dans la revendication 1, dans lequel le rapport pondéral de l'herbicide aryloxyphénoxy-propionate, ou de l'acide ou de l'ester de celui-ci, par rapport au mélange surfactant est 1 : 4.

13. Concentré émulsifiable tel que revendiqué dans la revendication 8, dans lequel le mélange surfactant comprend
a) un surfactant sulfaté comprenant un sel d'acide sulfonique de dodécylbenzène,
b) un alcool alkoxylé C₈₋₂₀ comprenant éthoxylate d'alcool laurylique, et
c) un dérivé de sorbitane comprenant mono-oléate de sorbitane polyoxyéthylène.

14. Procédé pour préparer une composition de concentré émulsifiable, le procédé comprenant :
le mélangeage d'un herbicide aryloxyphénoxy-propionate, ou d'un acide ou d'un ester de celui-ci, ou d'une combinaison de ceux-ci, et d'un solvant pour préparer un premier mélange, dans lequel l'herbicide aryloxyphénoxy-propionate est quizalofop ;
l'ajout d'un mélange surfactant au premier mélange pour obtenir un second mélange, dans lequel le mélange surfactant comprend un surfactant sulfaté, un alcool alkoxylé C₈₋₂₀, et un dérivé de sorbitane, lequel le dérivé de sorbitane comprend un ester de sorbitane, un ester de sorbitane éthoxylé, ou une combinaison de ceux-ci ; et
le malaxage du second mélange pour obtenir la composition de concentré émulsifiable,
dans lequel le rapport pondéral de l'herbicide aryloxyphénoxy-propionate, ou de l'acide ou de l'ester de celui-ci, ou d'une combinaison de ceux-ci, par rapport au mélange surfactant dans la composition de concentré émulsifiable varie de 1 : 0,9 à 1 : 5.

15. Procédé tel que revendiqué dans la revendication 14, comprenant en outre le chauffage de l'herbicide aryloxyphénoxy-propionate, ou de l'acide ou de l'ester de celui-ci, ou d'une combinaison de ceux-ci, à une température supérieure au point de fusion de l'herbicide aryloxyphénoxy-propionate, ou de l'acide ou de l'ester de celui-ci, pour liquéfier l'herbicide aryloxyphénoxy-propionate, ou l'acide ou de l'ester de celui-ci, dans lequel le chauffage est réalisé avant le mélangeage avec le solvant.

16. Méthode de contrôle de végétation indésirable comprenant la mise en contact de la végétation ou d'un lieu de celle-ci avec une quantité herbicide efficace d'une composition de concentré émulsifiable,
dans lequel la composition de concentré émulsifiable comprend : un herbicide aryloxyphénoxy-propionate, ou un acide ou ester de celui-ci, ou une combinaison de ceux-ci, dans lequel l'herbicide aryloxyphénoxy-propionate est quizalofop ; et un mélange surfactant comprenant un surfactant sulfaté, un alcool alkoxylé C₈₋₂₀, et un dérivé de sorbitane, lequel dérivé de sorbitane comprend un ester de sorbitane, un ester de sorbitane éthoxylé, ou une combinaison de ceux-ci, dans lequel le rapport pondéral de l'herbicide aryloxyphénoxy-propionate, ou de l'acide ou de l'ester de celui-ci, ou d'une combinaison de ceux-ci, par rapport au mélange surfactant varie de 1 : 0,5 à 1 : 10.

17. Méthode telle que revendiquée dans la revendication 16, dans lequel la composition de concentré émulsifiable comprend quizalofop-p-téfuryle et le rapport pondéral de l'herbicide quizalofop-p-téfuryle par rapport au mélange surfactant varie de 1 : 0,9 à 1 : 5.
